**Europäisches Patentamt**

**European Patent Office**

**Office européen des brevets**

(19)

(11) Veröffentlichungsnummer: **0 147 455**
**B1**

(12) **EUROPÄISCHE PATENTSCHRIFT**

(45) Veröffentlichungstag der Patentschrift:
**08.10.86**

(21) Anmeldenummer: **84902579.6**

(22) Anmeldetag: **18.06.84**

(86) Internationale Anmeldenummer:
**PCT/DE 84/00135**

(87) Internationale Veröffentlichungsnummer:
**WO 85/00039 (03.01.85** Gazette 85/1)

(51) Int. Cl.⁴: **C 09 D 3/24,** C 09 D 5/18 //
C08L53/02, C08K3/22

(54) **ANSTRICHMASSE FÜR BITUMINÖSE DACHFLÄCHEN.**

(30) Priorität: **18.06.83 DE 3322283**

(43) Veröffentlichungstag der Anmeldung:
**10.07.85 Patentblatt 85/28**

(45) Bekanntmachung des Hinweises auf die Patenterteilung:
**08.10.86 Patentblatt 86/41**

(84) Benannte Vertragsstaaten:
**AT BE CH DE FR GB LI LU NL SE**

(56) Entgegenhaltungen:
**EP - A - 0 064 630**
**DE - A - 2 755 682**
**FR - A - 2 343 033**
**US - A - 2 569 399**

(73) Patentinhaber: **AUGUST WILHELM ANDERNACH KG,**
**Maarstrasse 48, D-5300 Bonn 3 (DE)**

(72) Erfinder: **BICHLER, Dietmar, Peter, Eisenachstr. 18,**
**D-5205 St. Augustin - Niederberg (DE)**
Erfinder: **BLASS, Heinz, Gotenstrasse 12,**
**D-5210 Troisdorf (DE)**
Erfinder: **HAUSHOFER, Bert, Achim - von Arnim**
**Strasse 28, D-5300 Bonn 1 (DE)**

(74) Vertreter: **Berkenfeld, Helmut, Dipl.-Ing., An der**
**Schanz 2, D-5000 Köln 60 (DE)**

## Beschreibung

Die Erfindung betrifft eine Anstrichmasse für bituminöse Dachflächen mit Regenerierungs- und Brandschutzwirkung.

In jüngerer Zeit hat der vorbeugende Brandschutz insbesondere für grösse Industriebauten eine stärkere Bedeutung erlangt. Eine Kiesschüttung mit einer Höhe von zum Beispiel 50 mm ist ein idealer Brandschutz. Wegen ihres Gewichtes lässt sich eine solche Schüttung aber bei Industriehallen, die häufig im sogenannten Leichtbau errichtet sind, nicht auftragen. Das Gewicht der Kiesschüttung wirkt auch auf die Fundamente ein, und diese lassen sich nicht, mindestens nicht nachträglich, verstärken. Zum Brandschutz werden auch sogenannte Brandschutzbahnen verwendet. Diese werden unter Kunststoffolien, sogenannten Hochpolymer-Dachbahnen, ausgelegt.

Seit den 50er Jahren werden in zunehmendem Masse Industriehallen mit Dachflächen von 5.000 bis 30.000 m² und mehr gebaut. Bei diesen verlangen die Feuerwehr und die Versicherungen eine Verbesserung des Brandschutzes. Es ist dabei zu betonen, dass diese Dachflächen nach DIN 4102 widerstandsfähig gegen Flugfeuer und strahlende Wärme bzw. harte Bedachung gemäss LBO sind. Sehr viele dieser Hallen sind mit mehreren Bitumenbahnen abgedeckt. Diese entsprechen den Auflagen der Baupolizei. Bei einem Flächenfeuer oder bei Arbeiten mit einem Bitumenkocher auf der Dachfläche oder bei Arbeiten mit einem Schweissbrenner, zum Beispiel um die Dachflächen zu reparieren und/oder Risse auszubessern, entstehen immer wieder Flächenbrände.

Hiervon ausgehend stellt sich für die vorliegende Erfindung die Aufgabe, eine Massnahme zum vorbeugenden Brandschutz zu entwickeln, mit der solche Flächenbrände verhindert werden, dass heisst der Brand zum Zeitpunkt seines Entstehens unterdrückt oder, sofern er einmal ausgebrochen ist, an einem Weiterlaufen in der Dachfläche gehindert wird.

Die Lösung für diese Aufgabe ergibt sich nach der Erfindung mit einer Anstrichmasse aus einem Gemisch aus einer Basis aus Elastomerbitumen und flammhemmenden Zusätzen.

Eine solche Anstrichmasse kann sowohl beim Herrichten der Dachfläche als auch nachträglich im Zuge von deren Unterhalt oder Regenerierung aufgetragen werden. Durch einen thixotropen Zusatz ist die Anstrichmasse gut streichfähig und kann kalt aufgebracht werden. In Mengen von zirka 0,5 bis 1,5 kg/m² wird sie aufgesprüht oder aufgestrichen. Mineralien können anschliessend aufgestreut werden.

In einer zweckmässigen Ausgestaltung ist vorgesehen, dass das erfindungsgemässe Gemisch in einem organischen Lösungsmittel suspendiert ist.

Die erfindungsgemässe Anstrichmasse enthält als Basis vorteilhaft Elastomerbitumen bestehend aus 5 bis 20 Gew.-%, vorzugsweise 10 bis 15 Gew.-%, Styrol-Butadien-Styrol-Blockpolymer (SBS-Kautschuk) und 80 bis 95 Gew.-%, vorzugsweise 85 bis 90 Gew.-%, Primärbitumen.

Als flammhemmende Zusätze empfehlen sich gemäss der Erfindung:
a) 50 bis 200 Gewichtsteile Aluminiumhydroxid $Al(OH)_3$ oder
b) 5 bis 50 Gewichtsteile Alkali- und Erdalkalihydroxide oder Silikate, beides bezogen auf 100 Gewichtsteile Elastomerbitumen, oder vorzugsweise
c) ein Gemichs aus a) und b).

Als flammhemmende Zusätze empfehlen sich gemäss der Erfindung weiter:
a) 50 bis 200 Gewichtsteile Aluminiumhydroxid $Al(OH)_3$ und
b) 5 bis 50 Gewichtsteile Zinkborat, beides bezogen auf 100 Gewichtsteile Elastomerbitumen.

Als flammhemmende Zusätze empfehlen sich gemäss der Erfindung schliesslich noch:
a) 50 bis 200 Gewichtsteile Aluminiumhydroxid $Al(OH)_3$ und
b) ein Gemisch aus:
  – 15 bis 40 Gewichtsteilen eines gegebenenfalls in Gegenwart eines Aldehydlieferanten wärmeaktiven Phenolharzes,
  – 25 bis 40 Gewichtsteilen eines Ammoniumsalzes,
  – 10 bis 20 Gewichtsteilen eines Kohlenhydrates und/oder eines mehrwertigen Alkohols,
  – 15 bis 40 Gewichtsteilen einer nicht chemisch gebundenen wärmezersetzlichen organischen Stickstoffverbindung aus der Gruppe Harnstoff, Melamin oder Dicyandiamid, jeweils bezogen auf 100 Gewichtsteile Elastomerbitumen.

Schliesslich können als flammhemmende Zusätze auch nur das letztgenannte Gemisch aus den Bestandteilen unter b) verwendet werden.

Zur Haftverbesserung können der Anstrichmasse 0,5 bis 2,0 Gew.-% Fettsäure-Polyaminoamide zugesetzt werden. Als thixotropes Additiv kann die Anstrichmasse weiter 0,2 bis 2,0 Gew.-% eines organisch modifizierten Schichtsilikates enthalten.

Die Wirkungsweise der erfindungsgemässen Anstrichmasse sowohl bei ihrem Auftragen auf die bituminöse Dachfläche als auch später beim Verhindern eines Brandes lässt sich in Kurzform wie folgt beschreiben:

1. Anlösen der Bitumenoberfläche
  – Eindringen von Elastomerbitumen
  – gute Haftung
2. Bei Temperatureinwirkung über 200° C (Flamme)
  a) Freisetzung von Wasserdampf in endothermer Reaktion
  – Bildung von nicht brennbarem, sauerstoffverdrängendem Schutzgas (Wasserdampf)
  – Wärmeentzug aus Brandzone
  b) Verkrustung und Verglasung der noch unverbrannten Oberfläche
  – verhindert Sauerstoffzutritt nach unten
3. Keine Halogene
4. Flammschutzzusätze unlöslich in Wasser
  – keine Auswaschung

Falls bei einer erfindungsgemäss behandelten bituminösen Dachfläche die Flamme eines Schweissbrenners im Bitumen einen Brand erzeugt, wird dieser nach sehr kurzer Zeit verlöschen und auf keinen Fall weiterlaufen.

Eine erfindungsgemäss behandelte Dachfläche weist damit folgende Vorteile auf:

1. Sie besitzt einen bereits auf der Dachoberfläche befindlichen erhöhten Brandschutz,
2. sie ist, falls es sich um eine alte Dachfläche handelte, regeneriert und damit wieder beständig gegenüber Witterungseinflüssen und Abnutzung,
3. sie ist gegen ultraviolette Einstrahlung geschützt.

Bautechnisch, bauphysikalisch und auch im Hinblick auf den Brandschutz weist eine erfindungsgemäss behandelte Dachfläche damit deutliche Vorteile auf. Mit den Mitteln des Standes der Technik konnten diese Vorteile nicht erreicht werden, weil:

— durch die bei der Verklebung von Bitumen-Dachbahnen vorherrschende hohe Verarbeitungstemperatur schon ungewollte Reaktionen bei den bekannten Brandschutzbahnen ausgelöst werden,
— bisher bekannte Brandschutzanstrichmittel sich nachteilig auf die Funktion und Lebensdauer der Dachabdichtungsbahn auswirkten.

*Brandversuch und Beispiele:*

Die erfindungsgemässe Anstrichmasse wurde auf die Oberfläche eines praxisüblichen dreilagigen bituminösen Dachaufbaus, der eine 80 mm starke Polystyrol-Hartschaumdämmung aufwies, aufgetragen. Die Anstrichmasse wurde in einer Menge von zirka 1 kg/m² aufgetragen. Nachträglich kann noch ein Schiefersplitt aufgebracht werden.

Nach dem Trocknen wurde ein Propangasbrenner in einem Abstand von 25 cm von der Dachoberfläche gehalten und der Gasdruck so eingestellt, dass die Spitze der Flamme gerade auf die Oberfläche auftraf. An der Oberfläche wurde dabei eine Temperatur von zirka 1.000° C gemessen.

Es wurde vier Minuten beflammt. Nach dem Abstellen der Brennerflamme wurde die Zeit bis zum Verlöschen der letzten Flämmchen, die sogenannte Nachbrenndauer, gemessen. Nach dem Erkalten wurde die verbrannte Oberfläche ausgemessen.

Die genannten Mengen verstehen sich in Gewichtsteilen.

*Biespiele*

|  | 1 | 2 | 3 | 4 | 5 | 6 | 7 |
|---|---|---|---|---|---|---|---|
| Elastomer-Bitumen (12 Gew.-% SBS-Kautschuk) | 240 | 240 | 240 | 240 | 240 | 240 | 240 |
| Aluminiumhydroxid | — | — | 250 | 300 | 250 | 250 | 250 |
| Zinkborat | — | — | — | — | 40 | — | — |
| Gemisch von Alkali- und Erdalkalihydroxiden und Silikaten | — | 50 | 25 | — | — | — | — |
| vorstehend genanntes Gemisch mit den Bestandteilen unter b) | — | — | — | — | — | 25 | 50 |
| Haftmittel | 4,5 | 4,5 | 4,5 | 4,5 | 4,5 | 4,5 | 4,5 |
| Additiv | 5 | 5 | 5 | 5 | 5 | 5 | 5 |
| Organisches Lösungsmittel[1] | ca. 280 | ca. 300 | ca. 320 | ca. 350 | ca. 320 | ca. 350 | ca. 370 |
| Brandtest: verbrannte Flächen (cm²) | 1000 | ca. 300 | ca. 200 | ca. 250 | ca. 200 | ca. 200 | ca. 200 |
| Nachbrenndauer (Sek.) | über 300[2] | 45 | 30 | 40 | 20 | 30 | 45 |

Als Lösungsmittel können verwendet werden:
— chlorierte Kohlenwasserstoffe
— aromatenreiche Spezialbenzine
— Aromaten
  1) Lösungsmittelgehalt kann in Abhängigkeit vom Lösungsmittel etwas variieren, um streich- oder sprühfähige Konsistenz einzuhalten.
  2) Flammen mussten nach fünf Minuten abgelöscht werden.

## Patentansprüche

1. Anstrichmasse für bituminöse Dachflächen mit Regenerierungs- und Brandschutzwirkung, gekennzeichnet durch ein Gemisch aus einer Basis aus Elastomerbitumen und flammhemmenden Zusätzen.

2. Anstrichmasse nach Anspruch 1, dadurch gekennzeichnet, dass das Gemisch in einem organischen Lösungsmittel suspendiert ist.

3. Anstrichmasse nach Anspruch 1 und 2, dadurch gekennzeichnet, dass sie als Basis Elastomerbitumen bestehend aus 5 bis 20 Gew.-%, vorzugsweise 10 bis 15 Gew.-%, Styrol-Butadien-Styrolblockpolymer (SBS-Kautschuk) und 80 bis 95 Gew.-%, vorzugsweise 85 bis 90 Gew.-%, Primärbitumen enthält.

4. Anstrichmasse nach Anspruch 1 und 2, dadurch gekennzeichnet, dass sie als flammhemmende Zusätze
a) 50 bis 200 Gewichtsteile Aluminiumhydroxid Al(OH)$_3$ oder

b) 5 bis 50 Gewichtsteile Alkali- und Erdalkalihydroxide und Silikate, beides bezogen auf 100 Gewichtsteile Elastomerbitumen, oder vorzugsweise

c) ein Gemisch aus a) und b) enthält.

5. Anstrichmasse nach Anspruch 1 und 2, dadurch gekennzeichnet, dass sie als flammhemmende Zusätze 50 bis 200 Gewichtsteile Aluminiumhdroxid Al(OH)$_3$ enthält.

6. Anstrichmasse nach Anspruch 1 und 2, dadurch gekennzeichnet, dass sie als flammhemmende Zusätze

a) 50 bis 200 Gewichtsteile Aluminiumhydroxid Al(OH)$_3$ und

b) 5 bis 50 Gewichtsteile Zinkborat,

beides bezogen auf 100 Gewichtsteile Elastomerbitumen,
enthält.

7. Anstrichmasse nach Anspruch 1 und 2, dadurch gekennzeichnet, dass sie als flammhemmende Zusätze

a) 50 bis 200 Gewichtsteile Aluminiumhydroxid Al(OH)$_3$ und

b) ein Gemisch aus
   - 15 bis 40 Gewichtsteilen eines gegebenenfalls in Gegenwart eines Aldehydlieferanten wärmeaktiven Phenolharzes
   - 25 bis 40 Gewichtsteilen eines Ammoniumsalzes,
   - 10 bis 20 Gewichtsteilen eines Kohlenhydrates und/oder eines mehrwertigen Alkohols,
   - 15 bis 40 Gewichtsteilen einer nicht chemisch gebundenen wärmezersetzlichen organischen Stickstoffverbindung aus der Gruppe Harnstoff, Melamin oder Dicyandiamid,
   jeweils bezogen auf 100 Gewichtsteile Elastomerbitumen,
enthält.

8. Anstrichmasse nach Anspruch 1 und 2, dadurch gekennzeichnet, dass sie als flammhemmende Zusätze ein Gemisch aus

a) 15 bis 40 Gewichtsteilen eines gegebenenfalls in Gegenwart eines Aldehydlieferanten wärmeaktiven Phenolharzes

b) 25 bis 40 Gewichtsteilen eines Ammoniumsalzes,

c) 10 bis 20 Gewichtsteilen eines Kohlenhydrates und/oder eines mehrwertigen Alkohols,

d) 15 bis 40 Gewichtsteilen einer nicht chemisch gebundenen wärmezersetzlichen organischen Stickstoffverbindung aus der Gruppe Harnstoff, Melamin oder Dicyandiamid,

jeweils bezogen auf 100 Gewichtsteile Elastomerbitumen,
enthält.

9. Anstrichmasse nach den Ansprüchen 1 bis 8, dadurch gekennzeichnet, dass sie zur Haftverbesserung 0,5 bis 2,0 Gew.-% Fettsäure-Polyaminoamide enthält.

10. Anstrichmasse nach den Ansprüchen 1 bis 9, dadurch gekennzeichnet, dass sie als thixotropes Additiv 0,2 bis 2,0 Gew.-% eines organisch modifizierten Schichtsilikates enthält.

**Claims**

1. A coating material for bituminous roof surfaces with refurbishing and fire-proofing action characterised by a mixture on a basis of elastomer bitumen and flame-retardant additives.

2. Coating material according to claim 1, characterised in that the mixture is suspended in an organic solvent.

3. Coating material according to claim 1 and claim 2, characterised in that it contains as a basis elastomer bitumen, comprising 5 to 20% by weight, preferably 10 to 15% by weight of styrene butadiene styrene block polymer (SBS-rubber), and 80 to 95% by weight, preferably 85 to 90% by weight, of primary bitumen.

4. Coating material according to claim 1 and claim 2, characterised in that it contains as flame-retardant additives

a) 50 to 200 parts by weight of aluminium hydroxide Al(OH)$_3$, or

b) 50 parts by weight of alkali metal and alkaline earth hydroxides and silicates, both with respect to 100 parts by weight of elastomer bitumen, or preferably

c) a mixture of a) and b).

5. A coating material according to claim 1 and claim 2, characterised in that it contains 50 to 200 parts by weight of aluminium hydroxide Al(OH)$_3$ as flame-retardant additives.

6. Coating material according to claim 1 and claim 2, characterised in that it contains

a) 50 to 200 parts by weight of aluminium hydroxide Al(OH)$_3$ and

b) 5 to 50 parts by weight of zinc borate, both with respect to 100 parts by weight of elastomer bitumen, as flame-retardant additives.

7. Coating material according to claim 1 and claim 2, characterised in that as flame-retardant additives it contains

a) 50 to 200 parts by weight of aluminium hydroxide Al(OH)$_3$, and

b) a mixture of
   - 15 to 40 parts by weight of a phenol resin possibly heat-active in the presence of an aldehyde supplier,
   - 25 to 40 parts by weight of an ammonium salt,
   - 10 to 20 parts by weight of a carbohydrate and/or a polyvalent alcohol and
   - 15 to 40 parts by weight of a non-chemically bound heat-decomposable organic nitrogen compound from the group urea, melamine or dicyandiamide, with respect to 100 parts by weight of elastomer bitumen.

8. Coating material according to claim 1 and claim 2, characterised in that as flame-retardant additives it contains a mixture of

a) 15 to 40 parts by weight of a phenol resin possibly heat-active in the presence of an aldehyde supplier,

b) 25 to 40 parts by weight of an ammonium salt,

c) 10 to 20 parts by weight of a carbohydrate and/or a polyvalent alcohol,

d) 15 to 40 parts by weight of a non-chemically bound heat-decomposable organic nitrogen compound from the group urea, melamine or dicyandiamide with respect to 100 parts by weight of elastomer bitumen.

9. Coating material according to claims 1 to 8, characterised in that for adhesion improvement it contains 0.5 to 2.0% by weight of fatty acid polyaminoamides.

10. Coating material according to claims 1 to 9, characterised in that it contains 0.2 to 2.0% by weight of an organically modified stratum silicate as thixotropic additive.

## Revendications

1. Produit de revêtement pour pans de toit bitumineux ayant un effet de régénération et de protection contre l'incendie, caractérisé par un mélange d'une base formée d'élastomères bitumineux avec des additifs ignifuges.

2. Produit de revêtement suivant la revendication 1, caractérisé en ce que le mélange se trouve en suspension dans un solvant organique.

3. Produit de revêtement suivant les revendications 1 et 2, caractérisé en ce qu'il contient comme base des élastomères bitumineux consistant en 5 à 20% en poids et de préférence 10 à 15% en poids de copolymères séquencés styrène-butadiène-styrène (caoutchouc SBS) et en 80 à 95% en poids et de préférence 85 à 90% en poids de bitume primaire.

4. Produit de revêtement suivant les revendications 1 et 2, caractérisé en ce qu'il contient comme additifs ignifuges:
a) 50 à 200 parties en poids d'hydroxyde d'aluminium $Al(OH)_3$, ou
b) 5 à 50 parties en poids d'hydroxydes et silicates alcalins et alcalino-terreux, tous deux sur base de 100 parties en poids d'élastomère bitumineux, ou de préférence
c) un mélange de a) et b).

5. Produit de revêtement suivant les revendications 1 et 2, caractérisé en ce qu'il contient comme additif ignifuge 50 à 200 parties en poids d'hydroxyde d'aluminium $Al(OH)_3$.

6. Produit de revêtement suivant les revendications 1 et 2, caractérisé en ce qu'il contient comme additifs ignifuges:

a) 50 à 200 parties en poids d'hydroxyde d'aluminium $Al(OH)_3$, et
b) 5 à 50 parties en poids de borate de zinc, tous deux sur base de 100 parties en poids d'élastomère bitumineux.

7. Produit de revêtement suivant les revendications 1 et 2, caractérisé en ce qu'il contient comme additifs ignifuges:
a) 50 à 200 parties en poids d'hydroxyde d'aluminium $Al(OH)_3$, et
b) un mélange de
— 15 à 40 parties en poids d'une résine phénolique éventuellement active à chaud en présence d'un générateur d'aldéhyde,
— 25 à 40 parties en poids d'un sel d'ammonium,
— 10 à 20 parties en poids d'un hydrate de carbone et/ou d'un alcool polyvalent,
— 15 à 40 parties en poids d'un composé organique azoté thermodécomposable non chimiquement combiné du groupe de l'urée, de la mélamine ou du dicyanodiamide,
tous sur base de 100 parties en poids d'élastomère bitumineux.

8. Produit de revêtement suivant les revendications 1 et 2, caractérisé en ce qu'il contient comme additif ignifuge un mélange de:
a) 15 à 40 parties en poids d'une résine phénolique éventuellement active à chaud en présence d'un générateur d'aldéhydes,
b) 25 à 40 parties en poids d'un sel d'ammonium,
c) 10 à 20 parties en poids d'un hydrate de carbone et/ou d'un alcool polyvalent,
d) 15 à 40 parties en poids d'un composé organique azoté thermodécomposable non chimiquement combiné du groupe de l'urée, de la mélamine ou du dicyanodiamide,
tous sur base de 100 parties en poids d'élastomère bitumineux.

9. Produit de revêtement suivant les revendications 1 à 8, caractérisé en ce qu'il contient 0,5 à 2,0% en poids de polyaminoamide d'acide gras pour l'amélioration de l'adhérence.

10. Produit de revêtement suivant les revendications 1 à 9, caractérisé en ce qu'il contient comme additif thixotrope 0,2 à 2,0% en poids d'un phyllosilicate modifié par un agent organique.